# EUROPÄISCHE PATENTSCHRIFT

(11) **EP 4 548 024 B1**
(45) Veröffentlichungstag und Bekanntmachung des Hinweises auf die Patenterteilung: **09.12.2026**
(21) Anmeldenummer: 23735021.0
(22) Anmeldetag: 26.06.2023
(51) Int. Cl.: F27D 17/15, F27D 17/17, F27D 11/02

(54) **CO2-FREIE ERZEUGUNG VON KÜNSTLICHEN PUZZOLANEN INSBESONDERE AUS TONEN**
CO2-FREE PRODUCTION OF ARTIFICIAL PUZZOLANES, ESPECIALLY FROM CLAY
PRODUCTION SANS CO2 DE PUZZOLANES ARTIFICIELS, NOTAMMENT À PARTIR D'ARGILE

(30) Priorität: 01.07.2022 DE 102022206778; 01.07.2022 BE 202205544
(43) Veröffentlichungstag der Anmeldung: 07.05.2025
(73) Patentinhaber: thyssenkrupp Polysius GmbH, 59269 Beckum (DE); thyssenkrupp AG, 45143 Essen (DE)
(72) Erfinder: SCHEFER, Dirk, 59320 Ennigerloh (DE); FLASSPÖHLER, Melanie, 44141 Dortmund (DE); GRUND, Guido, 59457 Werl (DE)
(74) Vertreter: Moser Götze & Partner Patentanwälte mbB
(86) Internationale Anmeldenummer: PCT/EP2023/067228
(87) Internationale Veröffentlichungsnummer: WO 2024/002927

(56) Entgegenhaltungen:
- EP-A1- 4 015 479
- WO-A2-2022/115721
- DE-A1- 102011 014 498
- DE-A1- 102014 102 474
- DE-A1- 102017 012 199
- US-A1- 2012 145 042

## Beschreibung

Die Erfindung betrifft eine Anlage und ein Verfahren zur Herstellung von künstlichen Puzzolanen insbesondere aus Tonen unter Vermeidung von fossilen Brennstoffen zur Senkung von CO₂-Emissionen.

Im Unterschied zur Klinkerherstellung, bei der aus Kalk beim Brennen große Mengen an CO₂ freigesetzt werden, ist dies bei der Herstellung künstlicher Puzzolane aus natürlichen Tonen zur Anwendung als Zementersatzstoff nicht der Fall. Hier stammt die Hauptmenge der CO₂-Emissionen aus fossilen Brennstoffen. Da die Prozesse aber auf gasförmige Brennstoffe, beispielsweise Erdgas, oder feste Brennstoffe, beispielsweise Kohlenstaub, aber auch auf Ersatzbrennstoffe ausgelegt sind, lassen sich die bestehenden Anlagen nicht einfach auf Energie aus Wind oder Sonne umstellen. Um diese Energiequellen nutzen zu können, ist eine radikale Veränderung des Anlagenaufbaus notwendig.

Aus der WO 2022 / 115 721 A2 ist ein Energiespeichersystem bekannt.

Aus der DE 10 2014 102 474 A1 ist ein Heizelement und ein Prozessheizer bekannt.

Aus der DE 102021 203071, DE 102021 203 072, DE 102021 203 073 und der DE 10 2021 203 074 sind Vorrichtungen und Verfahren zur thermischen Behandlung eines mineralischen Edukts bekannt.

Aus der DE 10 2020 211 750 A1 ist die Energierückgewinnung bei der Kühlung farboptimierter aktivierter Tone bekannt.

Aus der EP 4 015 479 A1 ist ein Verfahren zur Calcinierung eines Rohstoffes zum Erhalt eines Zementmaterials bekannt.

Aufgabe der Erfindung ist es, eine Anlage und ein Verfahren bereitzustellen, welches diese neuen regenerativen Energiequellen auch für die Herstellung von künstlichen Puzzolanen nutzt, um so die CO₂-Emission zu vermeiden.

Gelöst wird diese Aufgabe durch das Verfahren mit den in Anspruch 1 angegebenen Merkmalen sowie durch die Anlage mit den in Anspruch 9 angegebenen Merkmalen. Vorteilhafte Weiterbildungen ergeben sich aus den Unteransprüchen, der nachfolgenden Beschreibung sowie den Zeichnungen.

Die erfindungsgemäße Anlage dient zur thermischen Aktivierung feinkörniger mineralischer Rohstoffe und zur Erzeugung künstlicher Puzzolane. Mit der Anlage kann das erfindungsgemäße Verfahren durchgeführt werden.. Die Anlage weist eine Trocknungsvorrichtung, einen Vorwärmer und eine thermische Behandlungsvorrichtung auf. Die thermische Behandlungsvorrichtung kann beispielsweise ein Calcinator oder Aktivator sein. Der feinkörnige mineralische Rohstoff wird aus der Trocknungsvorrichtung über den Vorwärmer zur thermischen Behandlungsvorrichtung geführt. Der thermischen Behandlungsvorrichtung wird ein Gasstrom im Gegenstrom zugeführt und aus der thermischen Behandlungsvorrichtung dem Vorwärmer zugeführt. Hierbei können Feststoffstrom und Gasstrom streckenweise bevorzugt auch im Gleichstrom geführt werden und anschließend beispielsweise in einem Zyklon wieder getrennt werden. Solche Anlagen sind aus dem Stand der Technik dem Fachmann bekannt, lediglich beispielhaft wird auf die DE 10 2020 211 750 A1verwiesen.

Erfindungsgemäß ist entlang dem Gasstrom vor der thermischen Behandlungsvorrichtung eine erste Gasstromheizung angeordnet. Somit unterscheidet sich die erfindungsgemäße Anlage grundlegend von einer Anlage nach dem Stand der Technik. Die Energie wird somit nicht mehr über einen Brenner in der thermischen Behandlungsvorrichtung erzeugt, sondern durch die erste Gasstromheizung dem der thermischen Behandlungsvorrichtung zugeführten Gasstrom aufgeprägt und über den Gasstrom in die thermische Behandlungsvorrichtung eingebracht. Dieses ermöglicht nun erstmalig die Verwendung von regenerativen Energien, insbesondere aus Sonne und Wind, zur Herstellung von künstlichen Puzzolanen.

Die Anlage ist mit einer Vorrichtung zur Erzeugung von regenerativer Energie verbunden. Beispiele für eine Vorrichtung zur Erzeugung von regenerativer Energie sind Solarzelle, Windkraftanlage, Wasserkraftwerk, Gezeitenkraftwerk, Biomassekraftwerk und dergleichen. Es umfasst aber ausdrücklich auch beispielsweise Solarthermie, wobei das heiße Wärmeträgermedium als Wärmeenergie auch direkt verwendet werden kann. Bevorzugt sind gerade bei der Bereitstellung elektrischer Energie kombinierte Anlagen, beispielsweise aus Solarzellen und Windkraft, um die gegenseitigen Schwankungen besser ausgleichen zu können. Die Verbindung zwischen der Anlage und der Vorrichtung zur Erzeugung von regenerativer Energie kann direkt sein, also die Vorrichtung zur Erzeugung von regenerativer Energie kann ein integrierter Bestandteil der Anlage sein. Ebenso kann die Anlage mit der Vorrichtung zur Erzeugung von regenerativer Energie beispielsweise über ein Stromnetz verbunden sein.

Die Anlage weist weiter wenigstens eine Energiespeichervorrichtung auf. Es können auch zwei oder mehr verschiedene Energiespeichervorrichtungen sein. Die Energiespeichervorrichtung kann beispielsweise ein Akkumulator zur Speicherung von elektrischer Energie sein. Die Energiespeichervorrichtung kann beispielsweise ein Lagertank für ein Wärmeträgermedium einer Solarthermie sein. Des Weiteren kann die Energiespeichervorrichtung ein Wärmespeicher innerhalb der Anlage sein. Daher kann es vorteilhaft sein, Energiespeichervorrichtungen zu kombinieren, beispielsweise einen Akkumulator und einen Wärmespeicher innerhalb der Anlage.

Die erfindungsgemäße Anlage bietet einen weiteren Vorteil. Da keine Verbrennung mehr stattfinden muss, muss der Gasstrom auch keinen Sauerstoff aufweisen. Dadurch ist es auch möglich, mit einer reinen Inertgasatmosphäre oder für eine Farboptimierung mit einer reduzierenden Atmosphäre zu arbeiten. Hierdurch kann eine Farboptimierung bereits bei der Aktivierung in einem einzigen Schritt erfolgen. Wird ein anderes Gas als Luft verwendet, so wird dieses bevorzugt rezirkuliert.

In einer weiteren Ausführungsform der Erfindung ist der feinkörnige mineralische Rohstoff ein natürlicher Ton, rein oder als Gemisch, eine tonartige Substanz, ein Zeolith, Altzementstein oder ein Gemisch hieraus.

In einer weiteren Ausführungsform der Erfindung weist die Anlage wenigstens eine Vorrichtung zur Erzeugung von regenerativer Energie auf, insbesondere eine Windkraftanlage oder ein Solarfeld. Besonders bevorzugt weist die Anlage wenigstens zwei unterschiedliche Vorrichtung zur Erzeugung von regenerativer Energie, beispielsweise eine Windkraftanlage und ein Solarfeld. Zusätzlich kann die Anlage beispielsweise eine Biogasanlage und eine Gasturbine aufweisen, um in Zeiten ohne Sonne und Wind aus Biogas CO₂ neutral Strom zu erzeugen. Dieses ermöglich eine höhere Flexibilität auch ohne große Batteriesysteme.

**In** einer weiteren Ausführungsform der Erfindung weist die Anlage wenigstens eine erste Energiespeichervorrichtung auf. Die wenigstens eine erste Energiespeichervorrichtung dient insbesondere zur Vergleichmäßigung der regenerativ erzeugten Energie, also beispielsweise als Tag-Nacht-Ausgleich für Solarstrom. Hierbei kann eine große erste Energiespeichervorrichtung vorgesehen sein, welche alle elektrisch betriebenen Anlagenbestandteile zu versorgen ausgebildet ist. Alternativ kann eine Mehrzahl an kleineren Energiespeichervorrichtungen vorgesehen sein, welche jeweils einzelne oder wenige Komponenten der Anlage versorgen. Als Energiespeichervorrichtungen können alle bekannten elektrischen Energiespeichervorrichtungen eingesetzt werden, beispielsweise Akkumulatoren und Kondensatoren, aber auch nicht rein elektrische Speicher, wie zum Beispiel ein Pumpspeicherwerk oder auch die Zwischenspeicherung in einem chemischen Produkt, zum Beispiel Wasserstoff (Kombination Elektrolyse/Brennstoffzelle).

Zusätzlich kann die Anlage auch eine Verbindung zum allgemeinen Stromnetz aufweisen. Hierdurch können nicht nur Schwankungen ausgeglichen werden, vielmehr kann auch bei einem Überangebot (und entsprechend geringem oder negativem Preis) auch Strom direkt verwendet werden oder auch in eine Energiespeichervorrichtung gegeben werden.

Besonders bevorzugt umfasst die Verbindung zwischen der Erzeugung und/oder Speicherung der regenerativen Energie nicht nur die erste Gasstromheizung, sondern alle Energie benötigenden Bauteile, also zum Beispiel Mühlen, Filter, Förderbänder, Kompressoren und dergleichen.

In einer weiteren Ausführungsform der Erfindung weist die erste Gasstromheizung wenigstens eine innere Oberfläche auf. Der Energieeintrag in das Gas erfolgt ausschließlich über die innere Oberfläche. Die innere Oberfläche kann beispielsweise die Oberfläche eines Heizdrahtes sein. Ebenso kann die innere Oberfläche eine metallische Oberfläche sein, welche von der Rückseite elektrisch beheizt wird. Ebenso kann die innere Oberfläche die Oberfläche eines von einem Wärmetauschmedium durchflossenen Körpers, insbesondere eines Rohres sein. Die innere Oberfläche kann auch die Oberfläche eines beheizten Wärmespeichermediums sein, beispielswiese einem Mauerwerk. Eine innere Oberfläche ist somit jede beliebige Oberfläche zu verstehen, die im Inneren der ersten Gasstromheizung angeordnet ist. Das unterscheidet sich grundlegend eben von einem Brenner, bei dem der Verbrennungsprozess die Energie im Inneren des Gasstroms und eben nicht über eine Oberfläche zur Verfügung stellt.

In einer weiteren Ausführungsform der Erfindung ist die erste Gasstromheizung ein Wärmetauscher. Diese Ausführungsform ist bevorzugt, wenn die Energie mittels Solarthernie, beispielsweise mittels einer Salzschmelze, gewonnen und bereitgestellt wird. Auf diese Weise kann die thermische Energie ohne Umwandlungsverluste bei einer vorhergehenden Verstromung optimal genutzt werden. Außerdem ist aus entsprechenden solarthermischen Anlagen auch die Zwischenspeicherung des warmen Wärmetauschmediums bekannt, um insbesondere die Nacht und/oder sonnenfreie Tage zu überbrücken.

In einer weiteren Ausführungsform der Erfindung ist die erste Gasstromheizung eine elektrische Gasstromheizung. Besonders bevorzugt wird der Gasstrom in nur einem Ringspalt um eine innere Oberfläche, welche elektrisch beheizt wird, geführt. So sind vergleichsweise hohe Temperaturen, die für den Prozess benötigt werden, in einfacher Form zu erzielen. Als Beispiel sei ein Heizelement entsprechend der DE 10 2014 102 474 A1 beispielhaft genannt.

In einer weiteren Ausführungsform der Erfindung ist die erste Gasstromheizung als Rohrbündelheizung ausgeführt. Durch die Ausführung als Rohrbündel kann die innere Oberfläche und damit der Wärmeübertrag gesteigert werden. Gleichzeitig wird durch die Verringerung der Dicke der Gasschicht die Diffusion innerhalb des Gases beschleunigt. Weiter wird die äußere Oberfläche, welche eine Wärmeabstrahlung und damit einen Wärmeverlust und damit eine Temperaturerniedrigung bewirkt, reduziert.

In einer weiteren Ausführungsform der Erfindung ist die Energiespeichervorrichtung ein Wärmespeicher. Zwischen der ersten Gasstromheizung und der thermischen Behandlungsvorrichtung ist der Wärmespeicher angeordnet. Der Wärmespeicher kann in einer großen durchströmten Masse bestehen. Beispielsweise kann der Wärmespeicher aus Mauermerk bestehen. Der Wärmespeicher kann aber auch aus Metall bestehen. Der Wärmespeicher dient insbesondere zu einer Temperaturvergleichmäßigung und kann somit zeitliche Schwankungen der erzeugten und damit in den Prozess eingebrachten regenerativen Energie ausgleichen.

In einer weiteren Ausführungsform der Erfindung ist zwischen der ersten Gasstromheizung und der thermischen Behandlungsvorrichtung ein Gas-Gas-Wärmetauscher angeordnet. Hierbei wird das ein Primärfluid zwischen der ersten Gasstromheizung und dem Gas-Gas-Wärmetauscher im Kreis geführt. Dadurch wird beispielsweise Staubeintrag in die erste Gasstromheizung vermeiden werden. Vielmehr kann ein Inertgas, beispielsweise Stickstoff oder Argon als Primärfluid verwendet werden, was zusätzlich beispielsweise eine Korrosion an den heißen Stellen der ersten Gasstromheizung vermeidet. Besonders bevorzugt ist der Gas-Gas-Wärmetausche als Gegenstromwärmetauscher ausgeführt. Das Primärfluid kann nach der ersten Gasstromheizung und dem Gas-Gas-Wärmetauscher beispielsweise eine Temperatur von 1400 °C bis 2000 °C aufweisen.

In einer weiteren Ausführungsform der Erfindung ist in Gasstromrichtung vor der Trocknungsvorrichtung eine zweite Gasstromheizung angeordnet. Aufgrund der hohen Verdampfungsenthalpie von Wasser besteht in der Trocknungsvorrichtung ein hoher Energiebedarf, wobei die Temperatur beispielsweise in einem Bereich unter 400 °C bleiben kann. In anderen Ausführungsformen kann es jedoch vorteilhaft sein, die Temperatur nach der zweiten Gasstromheizung deutlich heißer zu wählen, sodass diese insbesondere über 800 °C, beispielsweise bei 1000 °C bis 1200 °C liegt. Durch die höhere Temperatur kann ein kleinerer Gasstrom verwendet werden, wobei durch den Feuchtegehalt und die daraus resultierende Verdampfung der Feststoff in der Trocknungsvorrichtung selber nicht auf diese Temperatur gebracht wird. Da aber der Gasstrom die gesamte Energie bereitstellen soll, um beispielsweise eine Verbrennung zu ersetzen und damit einen CO₂ Ausstoß zu vermeiden, muss der Gasstrom massenmäßig angepasst sein, um die benötigte Energie transportieren zu können. Daher ist eine gezielte zweite Erwärmung in einer zweiten Gasstromheizung vorteilhaft.

In einer weiteren Ausführungsform der Erfindung weist die Anlage eine dritte Gasstromheizung auf. Die dritte Gasstromheizung ist gasführend mit der thermischen Behandlungsvorrichtung verbunden. Insbesondere ist die dritte Gasstromheizung stromab zur ersten Gasstromheizung angeordnet. Beispielswiese ist die Gaszuführung aus der ersten Gasstromheizung am Beginn der thermischen Behandlungsvorrichtung angeordnet und die Gaszuführung aus der dritten Gasstromheizung etwa in der Mitte der thermischen Behandlungsvorrichtung. Hierdurch kann zusätzlich thermische Energie zur Verfügung gestellt werden, nachdem im ersten Teil die aus der ersten Gasstromheizung kommenden Gase sich durch die thermische Behandlung abgekühlt haben.

In einer weiteren Ausführungsform der Erfindung sind die erste Gasstromheizung und eine optionale dritte Gasstromheizung zur vollständigen Bereitstellung der in der thermischen Behandlungsvorrichtung benötigten Energie ausgebildet. Die erste Gasstromheizung dient somit eben nicht nur dazu, einen Teilbetrag zu liefern, sondern es geht gerade darum, dass eben nicht nur ein Verbrennungsprozess durch die erste Gasstromheizung unterstützt wird, sondern die Gasstromheizung im Regelbetrieb den gesamten Energiebedarf zu decken in der Lage ist. Als Alternative kann zusätzlich ein Heizelement im Inneren der thermischen Behandlungsvorrichtung angeordnet sein. Dieses bietet Vor- und Nachteile. Ein Nachteil ist die Möglichkeit der Entstehung von Temperaturspitzen bei der Verwendung eines Heizelements in der thermischen Behandlungsvorrichtung, was wiederum zu einer Deaktivierung des Materials kommen kann, wenn gewissen Temperaturwerte lokal überschritten werden. Die Verwendung nur des Gasstroms als Energielieferant führt hingegen zu einem extrem gleichmäßigen Temperaturverlauf innerhalb der thermischen Behandlungsvorrichtung.

In einer weiteren Ausführungsform der Erfindung weist die thermische Behandlungsvorrichtung einen Reservebrenner auf. Der Reservebrenner dient beispielsweise dazu, bei einem Ausfall der regenerativen Energie einen Notbetrieb aufrecht erhalten zu können, beispielsweise um die Anlage sicher herunterzufahren oder zur Überbrückung auf Betriebstemperatur zu halten. Der Reservebrenner ist jedoch nicht für den Regel- oder Dauerbetrieb vorgesehen und damit nicht dafür ausgelegt.

In einer weiteren Ausführungsform der Erfindung weist die Anlage einen Materialkühler auf. Der Materialkühler dient dazu, das mineralische Material abzukühlen und die thermische Energie auf einen Gasstrom zu übertragen. Die thermische Behandlungsvorrichtung ist Feststoff-führend mit dem Materialkühler verbunden. Der Materialkühler ist gasführend mit der ersten Gasstromheizung und die erste Gasstromheizung ist gasführend mit der thermischen Behandlungsvorrichtung verbunden. Hierdurch wird die thermische Energie zurückgewonnen und die für die Erhitzung in der ersten Gasstromheizung benötigte regenerativ erzeugte Energie reduziert.

In einer weiteren Ausführungsform der Erfindung weist die Anlage einen Materialvorkühler auf. Der Materialvorkühler ist bevorzugt entlang des Stoffstroms vor dem Materialkühler angeordnet. Der Materialkühler dient insbesondere einer möglichst raschen ersten Abkühlung, beispielsweise auf eine Temperatur zwischen 400 °C und 500 °C. Dieses ist bevorzugt, wenn eine Farboptimierung des Produkts, beispielsweise in einer reduzierenden Atmosphäre durchgeführt wurde, um eine erneute Oxidation und damit eine neue Verfärbung des Produkts zu vermeiden. Beispielsweise kann ein Materialkühler ein Feststoff-Feststoff-Kühler sein, bei dem die Wärme eben nicht auf einen Gasstrom abgegeben wird. Ein entsprechendes Kühlkonzept kann beispielsweise der DE 10 2020 211 750 A1 entnommen werden.

In einer weiteren Ausführungsform der Erfindung weist die Anlage einen reduzierenden Reaktor, insbesondere einen reduzierenden Wirbelschichtreaktor, auf. Der reduzierende Reaktor, insbesondere der reduzierende Wirbelschichtreaktor, dient üblicherweise zur Farboptimierung des Produkts unter reduzierenden Bedingungen. Die thermische Behandlungsvorrichtung ist Feststoff-führend mit dem reduzierenden Wirbelschichtreaktor verbunden und der reduzierende Wirbelschichtreaktor ist Feststoff-führend mit dem Materialkühler verbunden.

In einer weiteren Ausführungsform der Erfindung ist die erste Gasstromheizung oder der der ersten Gasstromheizung nachgelagerten Wärmespeicher mit der Trocknungsvorrichtung gasführend verbunden. Somit wird ein Teilgasstrom direkt der Trocknungsvorrichtung zugeführt.

In einer weiteren Ausführungsform der Erfindung ist der Vorwärmer oder die Trocknungsvorrichtung gasführend mit der ersten Gasstromheizung verbunden. Eine derartige Kreislaufführung ist besonders bevorzugt, wenn nicht mit Luft als Gas gearbeitet wird, sondern insbesondere wenn ein Inertgas oder eine reduzierende Atmosphäre verwendet wird. Hierdurch kann das wertvolle Gas wiederverwendet werden.

In einer weiteren Ausführungsform der Erfindung weist die thermische Behandlungsvorrichtung ein Oberflächenheizelement auf. Auch wenn dieses das Risiko lokaler Temperaturspitzen mit sich bringen kann, ist es auf diese Weise möglich, Energie aus einer regenerativen Energiequelle direkt in die thermische Behandlungsvorrichtung einzubringen beziehungsweise Abstrahlungsverluste zu kompensieren und so die Reaktion zu unterstützen und die mittlere Temperatur zu vergleichmäßigen.

In einer weiteren Ausführungsform der Erfindung ist eine Gasverbindung zwischen dem Materialkühler und der thermischen Behandlungsvorrichtung angeordnet. Hierdurch kann vergleichswiese kaltes Gas der thermischen Behandlungsvorrichtung zugeführt werden und durch Mischung die Temperatur in einfacher und sehr schneller Wiese geregelt werden.

In einer weiteren Ausführungsform der Erfindung ist eine Gasverbindung zwischen dem Materialkühler und der Trocknungsvorrichtung angeordnet. Hierdurch kann die bei der Materialkühlung entstehende Wärme in einfacher und effizienter Weise für die Trocknung verwendet werden.

In einer weiteren Ausführungsform der Erfindung ist eine Gasverbindung zwischen dem Materialkühler und der zweiten Gasstromheizung angeordnet. Auch hierdurch kann die Wärme bei der Materialkühlung für die Trocknung verwendet werden.

In einer weiteren Ausführungsform der Erfindung ist eine Gasverbindung zwischen dem Materialkühler und der dritten Gasstromheizung angeordnet.

In einer weiteren Ausführungsform der Erfindung ist eine Gasverbindung zwischen der Trocknungsvorrichtung und der ersten Gasstromheizung angeordnet. Hierdurch wird der Wasserdampf in das System eingetragen, was wiederum die Wärmekapizität erhöht, was wiederum zu einem geringeren Absinken der Temperatur innerhalb der thermischen Behandlungsvorrichtung führt.

In einer weiteren Ausführungsform der Erfindung ist eine Gasverbindung zwischen der Trocknungsvorrichtung und der dritten Gasstromheizung angeordnet. Hierdurch wird der Wasserdampf in das System eingetragen, was wiederum die Wärmekapizität erhöht, was wiederum zu einem geringeren Absinken der Temperatur innerhalb der thermischen Behandlungsvorrichtung führt.

In einer weiteren Ausführungsform der Erfindung ist vor der ersten Gasstromheizung ein Staubfilter angeordnet.

In einem weiteren Aspekt betrifft die Erfindung ein Verfahren zur thermischen Aktivierung feinkörniger mineralischer Rohstoffe zur Erzeugung künstlicher Puzzolane, insbesondere für eine erfindungsgemäße Anlage. Wie nach dem Stand der Technik üblich, wird der Materialstrom über einen Vorwärmer und durch eine thermische Behandlungsvorrichtung geführt. Erfindungswesentlich ist, dass der Gasstrom vor der Zuführung zur thermischen Behandlungsvorrichtung in der ersten Gasstromheizung erhitzt wird. Die Energie für den Prozess in der thermischen Behandlungsvorrichtung wird also nicht in der thermischen Behandlungsvorrichtung durch eine Verbrennung erzeugt und bereitgestellt, sondern vor dem Eintritt in die thermische Behandlungsvorrichtung dem Gasstrom in der ersten Gasstromheizung aufgeprägt und durch den Gasstrom in die thermische Behandlungsvorrichtung eingebracht. Hierdurch ist es in einfacher Art möglich, vollständig auf regenerativ erzeugte Energie zurückzugreifen und somit eine CO₂ Emission für die Energieerzeugung zu vermeiden und so die Herstellung künstlicher Puzzolane klimaneutral zu gestallten.

Die Energie für die erste Gasstromheizung wird regenerativ erzeugt, also beispielsweise elektrische oder thermische Energie aus Sonnenlicht oder Windkraft erzeugt. Die Energie für die erste Gasstromheizung oder die durch die erste Gasstromheizung erzeugte Wärme wird in einer Speichervorrichtung wenigstens teilweise zwischengespeichert. Hierdurch wird eine Vergleichmäßigung insbesondere zum Ausgleich der Schwankungen der erzeugten regenerativen Energie erreicht.

Erfindungsgemäß wird der Gasstrom in der ersten Gasstromheizung auf 800 °C bis 1800 °C bevorzugt auf 800 °C bis 1600 °C, bevorzugt auf 800 °C bis 1400 °C, bevorzugt auf 800 °C bis 1200 °C, ganz besonders bevorzugt auf 1000 °C bis 1200 °C, erhitzt.

In einer weiteren Ausführungsform der Erfindung wird als feinkörnige mineralische Rohstoffe ein natürlicher Ton, rein oder als Gemisch, eine tonartige Substanz, ein Zeolith, Altzementstein oder ein Gemisch ausgewählt.

In einer weiteren Ausführungsform der Erfindung wird das Gas in der ersten Gasstromheizung über eine innere Oberfläche der ersten Gasstromheizung erhitzt.

In einer weiteren Ausführungsform der Erfindung wird der Trocknungsvorrichtung ein weiterer Gasstrom zugeführt. Der weitere Gasstrom wird in einer zweiten Gasstromheizung erhitzt. Hierdurch kann erreicht werden, dass auch für die Trocknungsvorrichtung in einfacher Weise ausreichend Energie auf dem richtigen Temperaturniveau zur Verfügung steht.

In einer weiteren Ausführungsform der Erfindung wird der thermischen Behandlungsvorrichtung ein Zusatzgasstrom zugeführt. Der Zusatzgasstrom wird in einer dritten Gasstromheizung erhitzt. Dieses ermöglicht die Zuführung eines zweiten Gasstromes, beispielsweise in der Mitte der thermischen Behandlungsvorrichtung. Dadurch kann dort erneut heißeres Gas zugeführt und somit gezielt die thermische Aktivierung gesteuert/beeinflusst werden und/oder das Temperaturprofil über die thermische Behandlungsvorrichtung vergleichmäßigt werden.

In einer weiteren Ausführungsform der Erfindung stellen die erste Gasstromheizung und eine optionale dritte Gasstromheizung die gesamte in der thermischen Behandlungsvorrichtung benötigten Energie bereit. Hierdurch kann auf ein in der thermischen Behandlungsvorrichtung angeordnetes Heizelement verzichtet werden.

In einer weiteren Ausführungsform der Erfindung wird bei einem Ausfall der Energieversorgung und somit der ersten Gasstromheizung ein Reservebrenner zur Erzeugung thermischer Energie in der thermischen Behandlungsvorrichtung verwendet. Dadurch können Ausfälle überbrückt oder ein sicheres Herunterfahren gewährleistet werden. Die Verwendung des Reservebrenners ist jedoch nur für solche Ausnahmesituationen vorgesehen.

In einer weiteren Ausführungsform der Erfindung wird der aus einem Materialkühler kommende Gasstrom in der ersten Gasstromheizung erhitzt. Hierdurch kann die Abwärme des Materialstroms in effizienter Weise genutzt werden und somit auch der Energiebedarf der ersten Gasstromheizung reduziert werden.

In einem weiteren Aspekt betrifft die Erfindung ein Regelungsverfahren, wobei die aus der ersten Gasstromheizung austretende Gastemperatur gemessen wird und wobei der der ersten Gasstromheizung zugeführte Gasstrom und die der ersten Gasstromheizung zugeführte elektrische Energie in Abhängigkeit von der gemessenen Gastemperatur geregelt werden. Besonders bevorzugt erfolgt die Regelung derart, dass die zur Verfügung stehende elektrische Energie (aus der aktuell erzeugten Energiemenge sowie beispielsweise der Restladung eines Batteriespeichers) berücksichtigt wird. Besonders bevorzugt wird zusätzlich auch di der Anlage zugeführte Feststoffmenge in Abhängigkeit der zur Verfügung stehende elektrische Energie (aus der aktuell erzeugten Energiemenge sowie beispielsweise der Restladung eines Batteriespeichers) geregelt. Sinkt also beispielsweise die Energieproduktion, beispielsweise nachts bei einer Solaranlage oder bei einer Windflaute bei einer Windkraftanlage, so wird die Auslastung der Anlage entsprechend angepasst
Nachfolgend ist die erfindungsgemäße Anlage anhand der in den Zeichnungen dargestellten Ausführungsbeispiele näher erläutert.
- Fig. 1: erste beispielhafte Ausführungsform
- Fig. 2: zweite beispielhafte Ausführungsform
- Fig. 3: dritte beispielhafte Ausführungsform
- Fig. 4: vierte beispielhafte Ausführungsform
- Fig. 5: fünfte beispielhafte Ausführungsform
- Fig. 6: sechste beispielhafte Ausführungsform
- Fig. 7: siebente beispielhafte Ausführungsform
- Fig. 8: achte beispielhafte Ausführungsform
- Fig. 9: neunte beispielhafte Ausführungsform
- Fig. 10: zehnte beispielhafte Ausführungsform
- Fig. 11: elftes beispielhafte Ausführungsform
- Fig. 12: zwölftes beispielhafte Ausführungsform

Gleiche Bauteile sind im Folgenden mit gleichen Bezugszeichen versehen, um die Vergleichbarkeit über die verschiedenen Ausführungsformen zu vereinfachen.

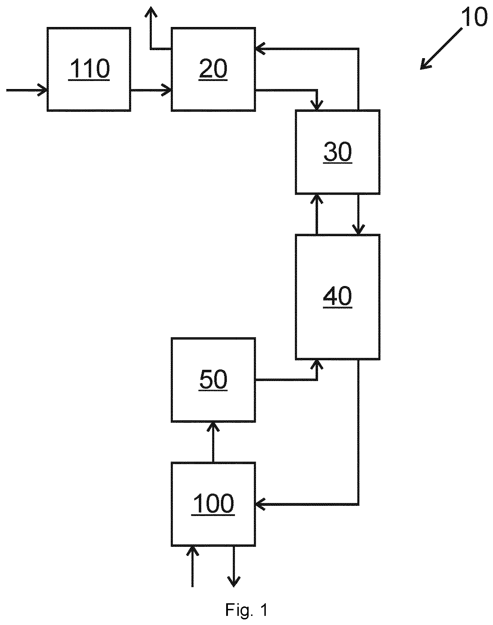

In Fig. 1 ist eine erste beispielhafte Ausführungsform gezeigt. Die Anlage 10 weist eine Mühle 110 auf, in der beispielsweise Ton als Ausgangsprodukt, vermahlen wird. Von dort geht der Feststoffstrom in die Trocknungsvorrichtung 20 überführt und dort getrocknet. Von dort wird der Feststoffstrom über den Vorwärmer 30 in die thermische Behandlungsvorrichtung 40 geführt und anschließend in einen Materialkühler 100 geführt. Im Materialkühler 100 wird der der Feststoffstrom mit einem Gasstrom abgekühlt und der Gasstrom dabei aufgewärmt. Der vorgewärmte Gasstrom wird von dem Materialkühler 100 in die erste Gasstromheizung 50 geführt und dort insbesondere elektrisch, auf beispielsweise 1200 °C aufgeheizt. Hierzu wird besonders bevorzugt regenerativ erzeugter Strom, insbesondere aus einem Solar- und Windkraft-Mix verwendet. Hierdurch kann vollständig auf fossile Brennstoffe verzichtet werden und somit die Herstellung künstlicher Puzzolane klimaneutral zu gestalten. Der Gasstrom wird aus der ersten Gasstromheizung 50 in die thermische Behandlungsvorrichtung geführt 40 und stellt dort die für die Behandlung benötigte Energie zur Verfügung. Anschließend wird der Gasstrom aus der thermischen Behandlungsvorrichtung 40 in den Vorwärmer und aus dem Vorwärmer 30 in die Trocknungsvorrichtung 20 geführt.

Im Folgenden wird nur noch auf die Unterschiede der einzelnen Ausführungsformen eingegangen.

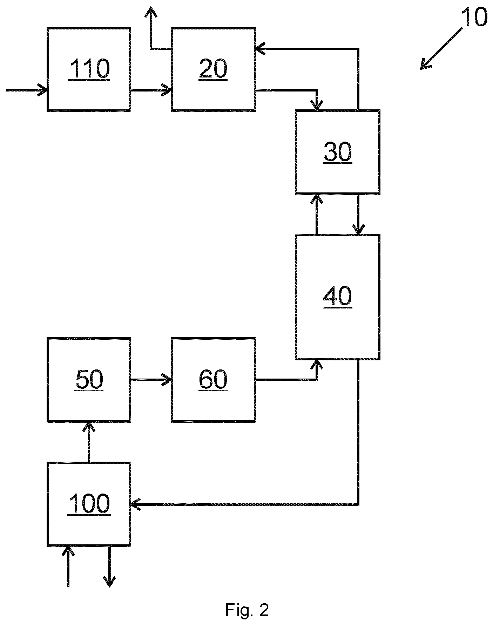

Fig. 2 zeigt eine zweite Ausführungsform, bei der im Unterschied zum in Fig. 1 gezeigten ersten Ausführungsform zusätzlich einen Wärmespeicher 60 zwischen der ersten Gasheizung 50 und der thermischen Behandlungsvorrichtung 40. Beispielsweise kann dieses ein gemauerter Bereich sein. Hierdurch wird eine Temperaturvergleichmäßigung erreicht, auch wenn beispielsweise der regenerativ erzeugte Strom, welcher für die elektrische Beheizung in der ersten Gasstromheizung 50 verwendet wird, Schwankungen aufweist.

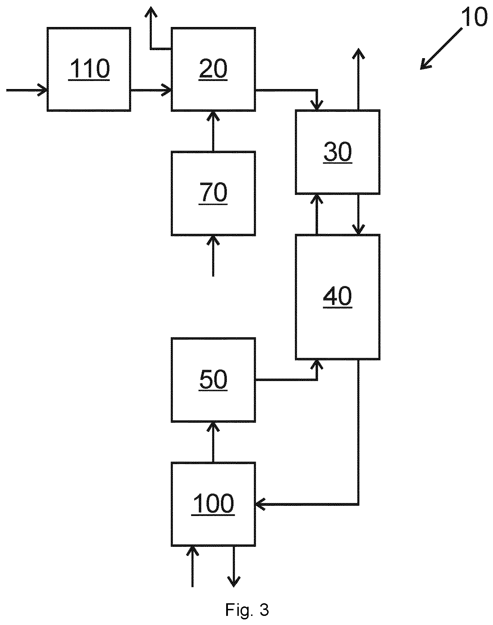

In Fig. 3 ist eine dritte Ausführungsform gezeigt, bei der im Unterschied zum in Fig. 1 gezeigten ersten Ausführungsform eine zweite Gasstromheizung 70 vorhanden ist, die einen Gasstrom erhitzt, welcher dann in die Trocknungsvorrichtung 20 geführt wird. Hierdurch kann der Energiebedarf über Gasstrommenge und Temperatur gezielt auf die für die Trocknung benötigte Energie angepasst werden. Im Gegenzug wird der Gasstrom aus dem Vorwärmer 30 verworfen. Alternativ könnet der Gasstrom aus dem Vorwärmer 30 auch der zweiten Gasstromheizung 70 zugeführt werden.

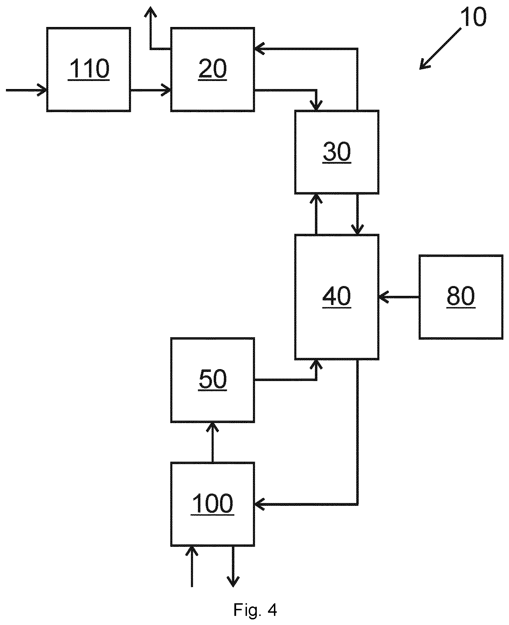

Fig. 4 zeigt eine vierte Ausführungsform, bei der im Unterschied zum in Fig. 1 gezeigten ersten Ausführungsform eine dritte Gasstromheizung 80 vorhanden ist. Die dritte Gasstromheizung 80 erhitzt einen Gasstrom, der etwa mittig in die thermische Behandlungsvorrichtung 40 zugeführt wird. Da in der thermischen Behandlungsvorrichtung 40 keine direkte interne Beheizung aufweist, wird die für die Feststoff-Umsetzung benötigte Energie aus dem Gasstrom entnommen, der dadurch abkühlt. Durch das Zuführen des Gasstromes aus der dritten Gasstromheizung 80 wird wieder ein heißer Gasstrom zugeführt und somit die Temperatur über die thermische Behandlungsvorrichtung 40 vergleichmäßigt.

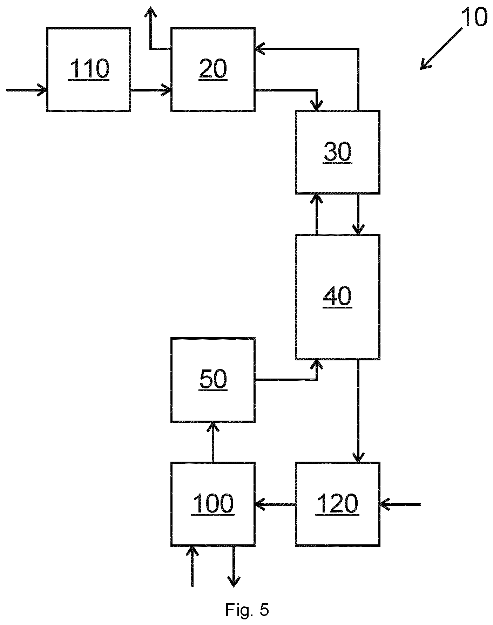

Fig. 5 zeigt eine fünfte Ausführungsform, bei der im Unterschied zum in Fig. 1 gezeigten ersten Ausführungsform einen reduzierenden Wirbelschichtreaktor 120, der zwischen der thermischen Behandlungsvorrichtung 40 und dem Materialkühler 100 angeordnet ist. In dem reduzierenden Wirbelschichtreaktor 120 wird in einer reduzierenden Atmosphäre eine Farboptimierung durchgeführt, also beispielsweise in einer Wasserstoff, Kohlenmonoxid, Kohlenwasserstoff oder ein Gasgemisch, welches diese Stoffe aufweist oder aus diesen hergestellt ist, aufweisenden Atmosphäre. Hierzu wird dem reduzierenden Wirbelschichtreaktor 120 ein geeignetes Reduktionsmittel entsprechend zugeführt. Durch die Abtrennung des Gasstromes von Materialkühler 100, thermischer Behandlungsvorrichtung 40 und Vorwärmer mit einer sauerstoffhaltigen Atmosphäre von der reduzierenden Atmosphäre im reduzierenden Wirbelschichtreaktor 120 kann deutlich an reduzierendem Medium eingespart werden.

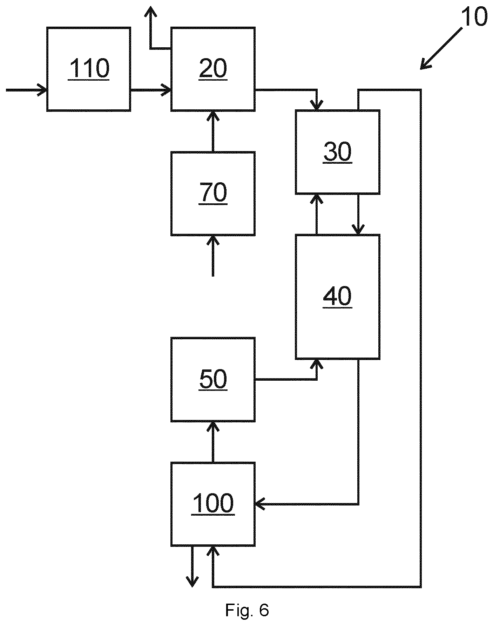

Fig. 6 zeigt eine sechste Ausführungsform, bei der im Unterschied zum in Fig. 3 gezeigten dritten Ausführungsform der Gasstrom nach dem Vorwärmer 30 optional über eine nicht gezeigte Kühlvorrichtung dem Materialkühler 100 zugeführt wird. Dieses ermöglicht den Einsatz einer reduzierenden Atmosphäre in der thermischen Behandlungsvorrichtung 40. Um aus dem Ton austretende Gasprodukte abtrennen zu können, weist die Gasverbindung zwischen dem Vorwärmer 30 und dem Materialkühler 100 einen nicht gezeigten Gasstromteiler auf, um einen Teilgasstrom abzutrennen und so eine Anreicherung der dem Ton austretende Gasprodukte zu verhindern.

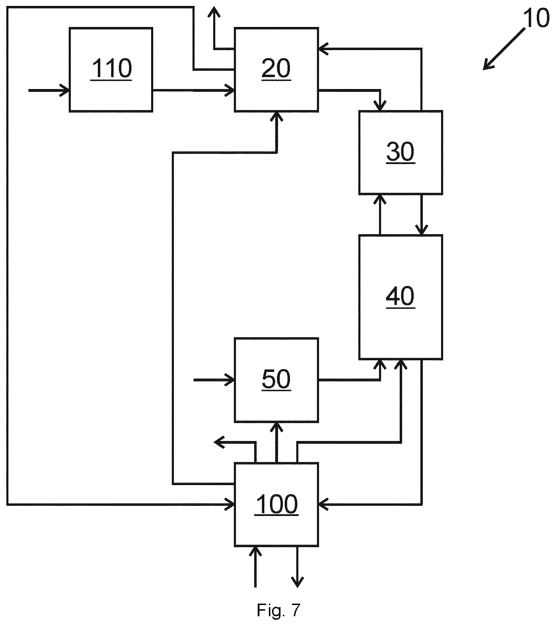

Fig. 7 zeigte eine siebente Ausführungsform, bei der im Unterschied zur in Fig. 1 gezeigten ersten Ausführungsform zusätzliche Gasverbindungen vorhanden sind. Vom Materialkühler 100 gehen Gasverbindungen zur thermischen Behandlungsvorrichtung 40 und zur Trocknungsvorrichtung 20. Zusätzlich kann warme Luft auch an anderer Stelle der Anlage 10 verwendet werden. Des Weiteren ist auch eine rückführende Gasverbindung von der Trocknungsvorrichtung 20 zum Materialkühler 100 vorhanden. Diese zusätzlichen Gasverbindungen sind auch auf die zweite bis sechste Ausführungsform entsprechend analog anwendbar.

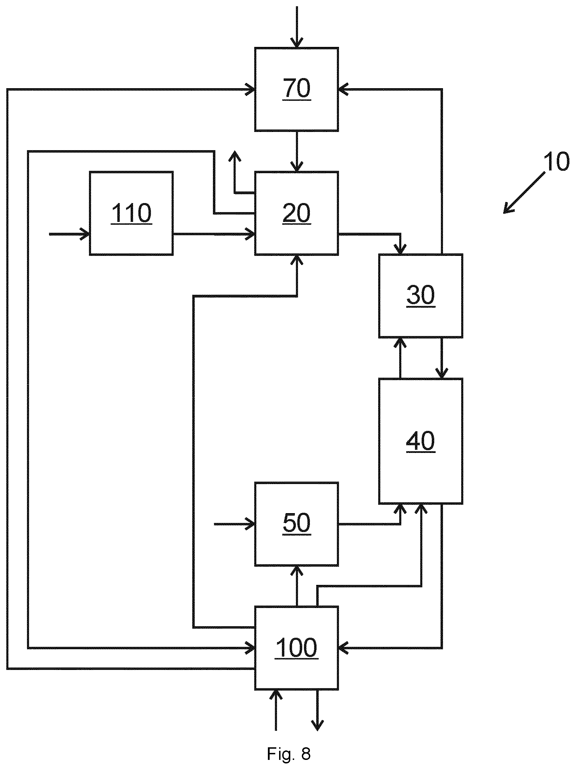

Die in Fig. 8 gezeigte achte Ausführungsform stellt eine Kombination der in Fig. 3 gezeigten dritten Ausführungsform und der in Fig. 7 gezeigten siebenten Ausführungsform dar. Besonders wesentlich ist bei der achten Ausführungsform die Gasverbindung vom Vorwärmer 30 zur zweiten Gasstromheizung.

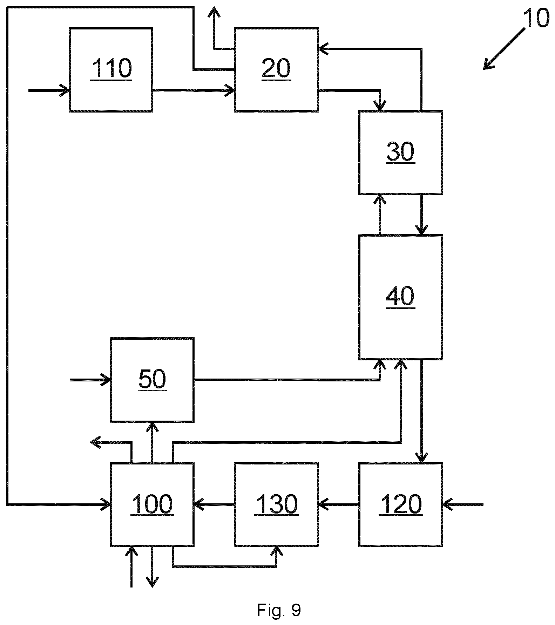

Die in Fig. 9 gezeigte neunte Ausführungsform stellt eine Kombination der in Fig. 5 gezeigten fünften Ausführungsform und der in Fig. 7 gezeigten siebenten Ausführungsform dar. Besonders wesentlich ist der Materialvorkühler 130. Zu diesem wird ein kalter Materialstrom aus dem Materialkühler 100 geführt, wodurch über einen Feststoff-Feststoff-Wärmeübergang die Temperatur effizient schnell abgesenkt und eine Verfärbung verhindert werden kann. Ein entsprechender Materialvorkühler 130 kann beispielsweise der DE 10 2020 211 750 A1 entnommen werden.

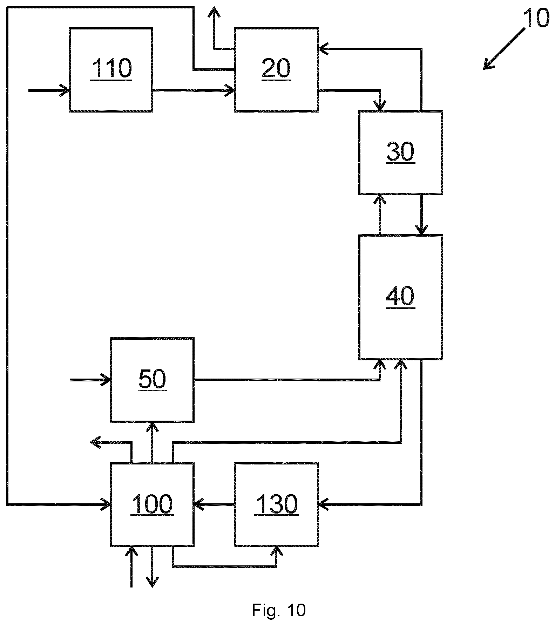

Fig. 10 zeigt eine zehnte Ausführungsform, die sich von der in Fig. 9 gezeigten neunten Ausführungsform dadurch unterscheidet, dass diese keinen reduzierenden Wirbelschichtreaktor 120 aufweist. Vielmehr erfolgt die Behandlung in der thermischen Behandlungsvorrichtung 40 bereits in einer reduzierenden Atmosphäre, weshalb insbesondere die Gasverbindung von den Trocknungsvorrichtung 20 zum Materialkühler 100 wichtig ist. In einer weiteren alternativen Ausführungsform kann zusätzlich oder anstelle dieser Gasverbindung eine Gasverbindung zwischen dem Vorwärmer und dem Materialkühler 100 und/oder der ersten Gasstromheizung angeordnet sein, um die reduzierende Atmosphäre im Kreis führen zu können.

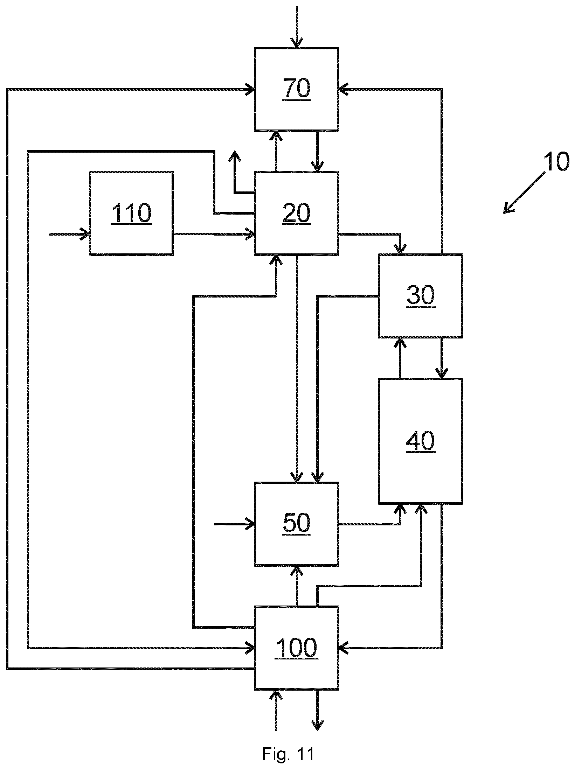

Die in Fig. 11 gezeigte elfte Ausführungsform unterscheidet sich von der in Fig. 8 gezeigten achten Ausführungsform durch zusätzliche Gasverbindungen vom Vorwärmer 30 zur ersten Gasstromheizung 50 sowie von der Trocknungsvorrichtung 20 zu ersten Gasstromheizung 50. Zusätzlich ist eine weitere Gasverbindung zwischen der Trocknungsvorrichtung 20 und der zweiten Gasstromheizung 70 angeordnet.

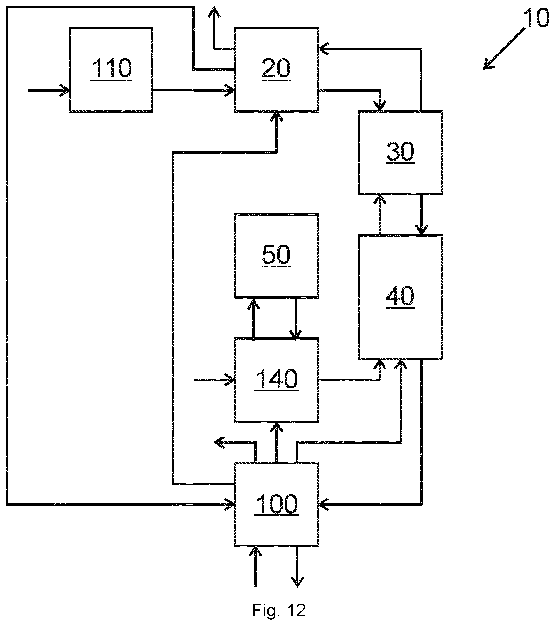

Die in Fig. 12 gezeigte zwölfte Ausführungsform unterscheidet sich von der in Fig. 7 gezeigten siebenten Ausführungsform dadurch, dass die erste Gasstromheizung 50 nicht direkt im Gasstrom angeordnet ist, sondern in einem Kreislauf mit einem Gas-Gas-Wärmetauscher 140 angeordnet ist, sodass die Heizoberflächen in der ersten Gasstromheizung 50 nicht in Kontakt mit Staub oder korrodierenden Gasverbindungen kommen. Hierdurch kann die Lebensdauer der ersten Gasstromheizung verlängert werden. Der Gas-Gas-Wärmetauscher ist besonders bevorzugt als Gegenstromwärmetauscher ausgebildet.

### Bezugszeichen

- 10: Anlage
- 20: Trocknungsvorrichtung
- 30: Vorwärmer
- 40: thermische Behandlungsvorrichtung
- 50: erste Gasstromheizung
- 60: Wärmespeicher
- 70: zweite Gasstromheizung
- 80: dritte Gasstromheizung
- 100: Materialkühler
- 110: Mühle
- 120: reduzierender Wirbelschichtreaktor
- 130: Materialvorkühler
- 140: Gas-Gas-Wärmetauscher

## Patentansprüche

1. Verfahren zur thermischen Aktivierung feinkörniger mineralischer Rohstoffe zur Erzeugung künstlicher Puzzolane, wobei der Materialstrom über einen Vorwärmer (30) und durch eine thermische Behandlungsvorrichtung (40) geführt wird, wobei der Gasstrom vor der Zuführung zur thermischen Behandlungsvorrichtung (40) in der ersten Gasstromheizung (50) erhitzt wird, wobei die Energie für die erste Gasstromheizung (50) regenerativ erzeugt wird, wobei die Energie für die erste Gasstromheizung (50) oder die durch die erste Gasstromheizung (50) erzeugte Wärme in einer Speichervorrichtung wenigstens teilweise zwischengespeichert wird, **dadurch gekennzeichnet, dass** der Gasstrom in der ersten Gasstromheizung (50) auf 800 °C bis 1800 °C erhitzt wird.

2. Verfahren nach Anspruch 1, **dadurch gekennzeichnet, dass** der Gasstrom in der ersten Gasstromheizung (50) auf 1000 °C bis 1200 °C erhitzt wird.

3. Verfahren nach einem der Ansprüche 1 bis 2, **dadurch gekennzeichnet, dass** als feinkörnige mineralische Rohstoffe ein natürlicher Ton, rein oder als Gemisch, eine tonartige Substanz, ein Zeolith, Altzementstein oder ein Gemisch ausgewählt wird.

4. Verfahren nach einem der Ansprüche 1 bis 3, **dadurch gekennzeichnet, dass** das Gas in der ersten Gasstromheizung (50) über eine innere Oberfläche der ersten Gasstromheizung (50) erhitzt wird.

5. Verfahren nach einem der Ansprüche 1 bis 4, **dadurch gekennzeichnet, dass** der Trocknungsvorrichtung (20) ein weiterer Gasstrom zugeführt wird, wobei der weitere Gasstrom in einer zweiten Gasstromheizung (70) erhitzt wird.

6. Verfahren nach einem der Ansprüche 1 bis 5, **dadurch gekennzeichnet, dass** der thermischen Behandlungsvorrichtung (40) ein Zusatzgasstrom zugeführt wird, wobei der Zusatzgasstrom in einer dritten Gasstromheizung (80) erhitzt wird.

7. Verfahren nach einem der Ansprüche 1 bis 6, **dadurch gekennzeichnet, dass** die erste Gasstromheizung (50) und eine optionale dritte Gasstromheizung (80) die gesamte in der thermischen Behandlungsvorrichtung (40) benötigten Energie bereitstellen.

8. Verfahren nach einem der Ansprüche 1 bis 7, **dadurch gekennzeichnet, dass** der aus einem Materialkühler kommende Gasstrom in der ersten Gasstromheizung (50) erhitzt wird.

9. Anlage (10) zur thermischen Aktivierung feinkörniger mineralischer Rohstoffe zur Erzeugung künstlicher Puzzolane zur Durchführung des Verfahrens nach einem der vorstehenden Ansprüche, wobei die Anlage (10) eine Trocknungsvorrichtung (20), einen Vorwärmer (30), einen Vorwärmer (30) und eine thermische Behandlungsvorrichtung (40) aufweist, wobei der feinkörnige mineralische Rohstoff aus der Trocknungsvorrichtung (20) über den Vorwärmer (30) zur thermischen Behandlungsvorrichtung (40) geführt wird, wobei ein Gasstrom der thermischen Behandlungsvorrichtung (40) zugeführt und aus der thermischen Behandlungsvorrichtung (40) dem Vorwärmer (30) zugeführt wird, **dadurch gekennzeichnet, dass** entlang dem Gasstrom vor der thermischen Behandlungsvorrichtung (40) eine erste Gasstromheizung (50) angeordnet ist, wobei die Anlage mit einer Vorrichtung zur Erzeugung von regenerativer Energie verbunden ist, wobei die Anlage eine Energiespeichervorrichtung aufweist.

10. Anlage (10) nach Anspruch 9, **dadurch gekennzeichnet, dass** die erste Gasstromheizung (50) wenigstens eine innere Oberfläche aufweist, wobei der Energieeintrag in das Gas ausschließlich über die innere Oberfläche erfolgt.

11. Anlage (10) nach einem der Ansprüche 9 bis 10, **dadurch gekennzeichnet, dass** die erste Gasstromheizung (50) ein Wärmetauscher ist.

12. Anlage (10) nach einem der Ansprüche 9 bis 11, **dadurch gekennzeichnet, dass** die erste Gasstromheizung (50) eine elektrische Gasstromheizung ist.

13. Anlage (10) nach einem der Ansprüche 9 bis 12, **dadurch gekennzeichnet, dass** die erste Gasstromheizung (50) als Rohrbündelheizung ausgeführt ist.

14. Anlage (10) nach einem der Ansprüche 9 bis 13, **dadurch gekennzeichnet, dass** die Energiespeichervorrichtung ein Wärmespeicher (60) ist, wobei zwischen der ersten Gasstromheizung (50) und der thermischen Behandlungsvorrichtung (40) der Wärmespeicher (60) angeordnet ist.

15. Anlage (10) nach einem der Ansprüche 9 bis 14, **dadurch gekennzeichnet, dass** zwischen der ersten Gasstromheizung (50) und der thermischen Behandlungsvorrichtung (40) ein Gas-Gas-Wärmetauscher (140) angeordnet ist.

16. Anlage (10) nach einem der Ansprüche 9 bis 15, **dadurch gekennzeichnet, dass** in Gasstromrichtung vor der Trocknungsvorrichtung (20) eine zweite Gasstromheizung (70) angeordnet ist.

17. Anlage (10) nach einem der Ansprüche 9 bis 16, **dadurch gekennzeichnet, dass** die Anlage (10) eine dritte Gasstromheizung (80) aufweist, wobei die dritte Gasstromheizung gasführend mit der thermischen Behandlungsvorrichtung (40) verbunden ist.

18. Anlage (10) nach einem der Ansprüche 9 bis 17, **dadurch gekennzeichnet, dass** die erste Gasstromheizung (50) und eine optionale dritte Gasstromheizung (80) zur vollständigen Bereitstellung der in der thermischen Behandlungsvorrichtung (40) benötigten Energie ausgebildet sind.

19. Anlage (10) nach einem der Ansprüche 9 bis 18, **dadurch gekennzeichnet, dass** die Anlage (10) einen Materialkühler (100) aufweist, wobei die thermische Behandlungsvorrichtung (40) Feststoff-führend mit dem Materialkühler (100) verbunden ist, wobei der Materialkühler (100) gasführend mit der ersten Gasstromheizung (50) und die erste Gasstromheizung (50) gasführend mit der thermischen Behandlungsvorrichtung (40) verbunden ist.

20. Anlage (10) nach einem der Ansprüche 9 bis 19, **dadurch gekennzeichnet, dass** die erste Gasstromheizung (50) oder der der ersten Gasstromheizung (50) nachgelagerten Wärmespeicher (60) mit der Trocknungsvorrichtung (20) gasführend verbunden ist.

21. Anlage (10) nach einem der Ansprüche 9 bis 20, **dadurch gekennzeichnet, dass** der Vorwärmer (30) oder die Trocknungsvorrichtung (20) gasführend mit der ersten Gasstromheizung (50) verbunden ist.

## Claims

1. A method for thermally activating fine-particle mineral raw materials for generating artificial pozzolans, where the flow of material is conducted by way of a preheater (30) and through a thermal treatment apparatus (40), where the gas flow is heated in the first gas flow heater (50) before being supplied to the thermal treatment apparatus (40), where the energy for the first gas flow heater (50) is generated regeneratively, and where the energy for the first gas flow heater (50) or the heat generated by the first gas flow heater (50) is at least partially stored temporarily in a storage apparatus, **characterized in that** in the first gas flow heater (50), the gas flow is heated to 800°C to 1800°C.

2. The method as claimed in claim 1, **characterized in that** in the first gas flow heater (50), the gas flow is heated to 1000°C to 1200°C.

3. The method as claimed in either of claims 1 to 2, **characterized in that** the fine-particle mineral raw materials selected comprise a natural clay, pure or as a mixture, a claylike substance, a zeolite, old hydrated cement, or a mixture.

4. The method as claimed in any of claims 1 to 3, **characterized in that** the gas in the first gas flow heater (50) is heated by way of an internal surface of the first gas flow heater (50).

5. The method as claimed in any of claims 1 to 4, **characterized in that** a further gas flow is supplied to the drying apparatus (20), the further gas flow being heated in a second gas flow heater (70).

6. The method as claimed in any of claims 1 to 5, **characterized in that** an ancillary gas flow is supplied to the thermal treatment apparatus (40), the ancillary gas flow being heated in a third gas flow heater (80).

7. The method as claimed in any of claims 1 to 6, **characterized in that** the first gas flow heater (50) and an optional third gas flow heater (80) provide the entire energy required in the thermal treatment apparatus (40).

8. The method as claimed in any of claims 1 to 7, **characterized in that** the gas flow coming from a materials cooler is heated in the first gas flow heater (50).

9. A plant (10) for thermally activating fine-particle mineral raw materials for generating artificial pozzolans for carrying out the method as claimed in any of the preceding claims, where the plant (10) includes a drying apparatus (20), a preheater (30), a preheater (30) and a thermal treatment apparatus (40), where the fine-particle mineral raw material is conducted from the drying apparatus (20) by way of the preheater (30) to the thermal treatment apparatus (40), where a gas flow is supplied to the thermal treatment apparatus (40) and supplied from the thermal treatment apparatus (40) to the preheater (30), **characterized in that** a first gas flow heater (50) is arranged ahead of the thermal treatment apparatus (40) along the gas flow, the plant being connected to an apparatus for generating regenerative energy, and the plant including an energy storage apparatus.

10. The plant (10) as claimed in claim 9, **characterized in that** the first gas flow heater (50) has at least one internal surface, the input of energy into the gas taking place exclusively by way of the internal surface.

11. The plant (10) as claimed in any of claims 9 to 10, **characterized in that** the first gas flow heater (50) is a heat exchanger.

12. The plant (10) as claimed in any of claims 9 to 11, **characterized in that** the first gas flow heater (50) is an electrical gas flow heater.

13. The plant (10) as claimed in any of claims 9 to 12, **characterized in that** the first gas flow heater (50) is implemented as a shell-and-tube heater.

14. The plant (10) as claimed in any of claims 9 to 13, **characterized in that** the energy storage apparatus is a heat store (60), the heat store (60) being arranged between the first gas flow heater (50) and the thermal treatment apparatus (40).

15. The plant (10) as claimed in any of claims 9 to 14, **characterized in that** a gas-gas heat exchanger (140) is arranged between the first gas flow heater (50) and the thermal treatment apparatus (40).

16. The plant (10) as claimed in any of claims 9 to 15, **characterized in that** a second gas flow heater (70) is arranged ahead of the drying apparatus (20) in gas flow direction.

17. The plant (10) as claimed in any of claims 9 to 16, **characterized in that** the plant (10) includes a third gas flow heater (80), the third gas flow heater being in gas-conducting communication with the thermal treatment apparatus (40).

18. The plant (10) as claimed in any of claims 9 to 17, **characterized in that** the first gas flow heater (50) and an optional third gas flow heater (80) are configured for complete provision of the energy required in the thermal treatment apparatus (40).

19. The plant (10) as claimed in any of claims 9 to 18, **characterized in that** the plant (10) includes a materials cooler (100), the thermal treatment apparatus (40) being in solids-conducting communication with the materials cooler (100), the materials cooler (100) being in gas-conducting communication with the first gas flow heater (50), and the first gas flow heater (50) being in gas-conducting communication with the thermal treatment apparatus (40).

20. The plant (10) as claimed in any of claims 9 to 19, **characterized in that** the first gas flow heater (50) or the heat store (60) downstream of the first gas flow heater (50) is in gas-conducting communication with the drying apparatus (20).

21. The plant (10) as claimed in any of claims 9 to 20, **characterized in that** the preheater (30) or the drying apparatus (20) is in gas-conducting communication with the first gas flow heater (50).

## Revendications

1. Procédé d'activation thermique de matières premières minérales à grains fins pour la production de pouzzolanes artificielles, dans lequel le flux de matière est conduit via un dispositif de préchauffage (30) et à travers un dispositif de traitement thermique (40), dans lequel le flux de gaz est chauffé dans le premier dispositif de chauffage de flux de gaz (50) avant l'alimentation au dispositif de traitement thermique (40), dans lequel l'énergie pour le premier dispositif de chauffage de flux de gaz (50) est produite de manière régénérative, l'énergie pour le premier dispositif de chauffage de flux de gaz (50) ou la chaleur produite par le premier dispositif de chauffage de flux de gaz (50) étant au moins partiellement stockée dans un dispositif de stockage, **caractérisé en ce que** le flux de gaz dans le premier dispositif de chauffage de flux de gaz (50) est chauffé à une température de 800 °C jusqu'à 1 800 °C.

2. Procédé selon la revendication 1, **caractérisé en ce que** le flux de gaz dans le premier dispositif de chauffage de flux de gaz (50) est chauffé à une température de 1 000 °C à 1 200 °C.

3. Procédé selon l'une quelconque des revendications 1 à 2, **caractérisé en ce que** l'on choisit, en tant que matières premières minérales à grains fins, une argile naturelle, pure ou en mélange, une substance argileuse, une zéolithe, une pierre de ciment ancien ou un mélange.

4. Procédé selon l'une quelconque des revendications 1 à 3, **caractérisé en ce que** le gaz dans le premier dispositif de chauffage de flux de gaz (50) est chauffé par l'intermédiaire d'une surface intérieure du premier dispositif de chauffage de flux de gaz (50).

5. Procédé selon l'une quelconque des revendications 1 à 4, **caractérisé en ce qu'**un flux de gaz supplémentaire est alimenté au dispositif de séchage (20), dans lequel le flux de gaz supplémentaire est chauffé dans un deuxième dispositif de chauffage de flux de gaz (70).

6. Procédé selon l'une quelconque des revendications 1 à 5, **caractérisé en ce qu'**un flux de gaz supplémentaire est alimenté au dispositif de traitement thermique (40), le flux de gaz supplémentaire étant chauffé dans un troisième dispositif de chauffage de flux de gaz (80).

7. Procédé selon l'une quelconque des revendications 1 à 6, **caractérisé en ce que** le premier dispositif de chauffage de flux de gaz (50) et un troisième dispositif de chauffage de flux de gaz (80) éventuel fournissent toute l'énergie qui est nécessaire dans le dispositif de traitement thermique (40).

8. Procédé selon l'une quelconque des revendications 1 à 7, **caractérisé en ce que** le flux de gaz provenant d'un refroidisseur de matière est chauffé dans le premier dispositif de chauffage de flux de gaz (50).

9. Installation (10) pour l'activation thermique de matières premières minérales à grains fins pour la production de pouzzolanes artificielles pour la mise en œuvre du procédé selon l'une quelconque des revendications précédentes, dans lequel l'installation (10) présente un dispositif de séchage (20), un dispositif de préchauffage (30), un dispositif de préchauffage (30) et un dispositif de traitement thermique (40), dans laquelle la matière première minérale à grains fins provenant du dispositif de séchage (20) est conduite au dispositif de traitement thermique (40) par l'intermédiaire du dispositif de préchauffage (30), un flux de gaz étant alimenté dans le dispositif de traitement thermique (40) et étant alimenté dans le dispositif de préchauffage (30) à partir du dispositif de traitement thermique (40), **caractérisée en ce qu'**un premier dispositif de chauffage de flux de gaz (50) est disposé le long du flux de gaz avant le dispositif de traitement thermique (40), l'installation étant reliée à un dispositif de production d'énergie régénérative, l'installation présentant un dispositif de stockage d'énergie.

10. Installation (10) selon la revendication 9, **caractérisée en ce que** le premier dispositif de chauffage de flux de gaz (50) présente au moins une surface intérieure, l'apport énergétique dans le gaz s'effectuant exclusivement par l'intermédiaire de la surface intérieure.

11. Installation (10) selon l'une quelconque des revendications 9 à 10, **caractérisée en ce que** le premier dispositif de chauffage de flux de gaz (50) est un échangeur de chaleur.

12. Installation (10) selon l'une quelconque des revendications 9 à 11, **caractérisée en ce que** le premier dispositif de chauffage de flux de gaz (50) est un dispositif électrique de chauffage de flux de gaz.

13. Installation (10) selon l'une quelconque des revendications 9 à 12, **caractérisée en ce que** le premier dispositif de chauffage de flux de gaz (50) est réalisé sous la forme d'un dispositif de chauffage à faisceau de tuyaux.

14. Installation (10) selon l'une quelconque des revendications 9 à 13, **caractérisée en ce que** le dispositif de stockage d'énergie est un dispositif de stockage de chaleur (60), dans lequel le dispositif de stockage de chaleur (60) est agencé entre le premier dispositif de chauffage de flux de gaz (50) et le dispositif de traitement thermique (40).

15. Installation (10) selon l'une quelconque des revendications 9 à 14, **caractérisée en ce qu'**un échangeur de chaleur gaz-gaz (140) est disposé entre le premier dispositif de chauffage de flux de gaz (50) et le dispositif de traitement thermique (40).

16. Installation (10) selon l'une quelconque des revendications 9 à 15, **caractérisée en ce qu'**un deuxième dispositif de chauffage de flux de gaz (70) est disposé dans la direction de flux de gaz avant le dispositif de séchage (20).

17. Installation (10) selon l'une quelconque des revendications 9 à 16, **caractérisée en ce que** le système (10) présente un troisième dispositif de chauffage de flux de gaz (80), le troisième dispositif de chauffage de flux de gaz étant relié de manière conductrice de gaz au dispositif de traitement thermique (40).

18. Installation (10) selon l'une quelconque des revendications 9 à 17, **caractérisée en ce que** le premier dispositif de chauffage de flux de gaz (50) et un troisième dispositif de chauffage de flux de gaz (80) éventuel sont conçus pour la fourniture totale de l'énergie requise dans le dispositif de traitement thermique (40).

19. Installation (10) selon l'une quelconque des revendications 9 à 18, **caractérisée en ce que** l'installation (10) comprend un refroidisseur de matière (100), le dispositif de traitement thermique (40) étant relié de manière conductrice de matière au refroidisseur de matière (100), le refroidisseur de matière (100) étant relié au premier dispositif de chauffage de flux de gaz (50) et le premier dispositif de chauffage de flux de gaz (50) étant relié de manière conductrice de gaz au dispositif de traitement thermique (40).

20. Installation (10) selon l'une quelconque des revendications 9 à 19, **caractérisée en ce que** le premier dispositif de chauffage de flux de gaz (50) ou le dispositif de stockage de chaleur (60) en aval du premier dispositif de chauffage de flux de gaz (50) est relié de manière conductrice de gaz au dispositif de séchage (20).

21. Installation (10) selon l'une quelconque des revendications 9 à 20, **caractérisée en ce que** le dispositif de préchauffage (30) ou le dispositif de séchage (20) est relié de manière conductrice de gaz au premier dispositif de chauffage de flux de gaz (50).
